# EUROPÄISCHE PATENTSCHRIFT

(11) **EP 1 242 156 B1**
(45) Veröffentlichungstag und Bekanntmachung des Hinweises auf die Patenterteilung: **16.11.2005**
(21) Anmeldenummer: 00976044.8
(22) Anmeldetag: 17.11.2000
(51) Int. Cl.: B01D 19/00, C08F 6/00, C08F 6/10, B01D 1/04

(54) **STRANGVERDAMPFER**
STRAND EVAPORATOR
EVAPORATEUR A TUBES

(30) Priorität: 29.11.1999 DE 19957458
(43) Veröffentlichungstag der Anmeldung: 25.09.2002
(73) Patentinhaber: Bayer MaterialScience AG, 51368 Leverkusen (DE)
(72) Erfinder: ELSNER, Thomas, 40593 Düsseldorf (DE); HEUSER, Jürgen, 47803 Krefeld (DE); KORDS, Christian, 47829 Krefeld (DE); KOHLGRÜBER, Clemens, 51515 Kürten (DE)
(86) Internationale Anmeldenummer: PCT/EP2000/011468
(87) Internationale Veröffentlichungsnummer: WO 2001/039856

(56) Entgegenhaltungen:
- US-A- 4 294 652
- US-A- 4 863 568
- US-A- 4 934 433
- US-A- 5 684 125

## Beschreibung

Die Erfindung betrifft einen Strangverdampfer mit einem Entgasungsbehälter, einem Produkteintrag mit wenigstens einem Verteilerrohr, einem Produktverteiler, einem Produktaustrag und einem Brüdenaustrag.

Solche Strangverdampfer werden insbesondere bei der Polymerherstellung eingesetzt, um die flüchtigen Bestandteile aus dem Produktstrom zu entfernen (siehe z.B. R.J. Albalak, "Polymer Devolatilization", Marcel Dekker Inc., 1996, S. 8). Dabei versucht man, innerhalb des Entgasungsbehälters den erhitzten Produktstrom (z.B. verflüssigtes Polymer freifallender) in möglichst viele (Polymer-) Stränge aufzuteilen, um eine möglichst hohe Oberfläche zu erzielen. Dünne Stränge ermöglichen dabei mehr Stränge je Flächeneinheit unterzubringen. Die Stranglänge und damit die Höhe des Entgasungsbehälters soll allerdings in vertretbaren Grenzen bleiben.

Bei Versuchsanlagen und Anlagen mit kleinerem Durchsatz ist es ausreichend, die Verteilung des Produktstroms über einen sogenannten Plattenverteiler vorzunehmen, bei dem unterhalb des Produkteintrages eine Lochplatte für die Aufteilung des Produktstromes in die einzelnen Stränge sorgt. Strangverdampfer mit Plattenverteiler sind z.B. aus den Patentschriften US 5 024 728 und US 4 934 433 bekannt. Im kleinen Maßstab wird zur Unterbringung der Bohrungen nur ein geringer Plattendurchmesser benötigt, deshalb ergibt sich auch bei einem hohen Produktvordruck (d.h. bei hohem Durchsatz, hoher Viskosität des Produktes) zur gleichmäßigen Produktverteilung über der Lochplatte aus Festigkeitsgründen nur eine geringe erforderliche Plattenstärke. Im Produktionsmaßstab jedoch muss der Durchmesser der Lochplatten wegen des erforderlichen Produktvordruckes sehr stark sein, um ihre Durchbiegung zuverlässig zu verhindern. Ein stärkerer Plattendurchmesser bedingt jedoch längere Bohrungen in der Lochplatte, so dass der Produktvordruck auf noch höhere Werte steigt, die sich wiederum auf die erforderliche Plattenstärke auswirken. Durch den beschränkten Produktdurchsatz bei Plattenverteilern lässt sich ein mit einem solchen Plattenverteiler versehener Strangverdampfer nicht beliebig vergrößern, insbesondere sind hohe Polymerdurchsätze (> 10 t/h) für die meisten Polymere mit ihrer typischerweise hohen Schmelzviskosität nicht möglich.

Ein weiterer Nachteil der Strangverdampferkonstruktion mit Plattenverteiler ist die Anordnung des Brüdenabzugs, die aufgrund der für die Produktverteilung durchgehenden Platte nur seitlich erfolgen kann, wodurch Strangablenkungen möglich sind.

Aus US-A 4 934 433 ist ein Strangverdampfer mit zwei parallel angeordneten Düsenrohren mit einer Vielzahl von Öffnungen bekannt. Ferner ist aus US-A 4 863 568 eine Vorrichtung mit zwei Verteilerrohren bekannt, die über Öffnungen mit einer Vielzahl von Rohren verbunden sind, wobei die Rohre sich im unteren Bereich zu Schlitzen verjüngen.

Der Erfindung liegt daher die Aufgabe zugrunde, einen eingangs genannten und zuvor näher beschriebenen Strangverdampfer so auszugestalten und weiterzubilden, dass, insbesondere bei großen Produktionsanlagen, eine optimale Belegungsdichte (Produktdurchsatz je Flächeneinheit) erreicht wird. Weiterhin ist eine hohe Flexibilität der Vorrichtung hinsichtlich des Produktdurchsatzes und der Werkstoffwahl erwünscht.

Diese Aufgabe wird erfindungsgemäß durch eine Strangverdampfervorrichtung gelöst, die wenigstens einen Entgasungsbehälter, einen Produkteintrag, einen Produktverteiler, einen Produktaustrag und einen Brüdenaustrag aufweist, wobei der Produktverteiler als Rohrverteiler mit mindestens einem Verteilerrohr und mit einer Vielzahl parallel angeordneter Düsenrohre, die eine Vielzahl von Öffnungen in der Rohrwand aufweisen, ausgebildet ist, und dass die Düsenrohre vorzugsweise in mehreren Ebenen übereinander und seitlich gegeneinander versetzt angeordnet sind, wobei die einzelnen Düsenrohre als Halbrohre oder Dreieck- oder Reckteckprofile ausgeführt sind, die nach unten jeweils durch eine ebene Lochplatte begrenzt sind, wobei die Vielzahl von Öffnungen in der Lochplatte derart angeordnet sind, dass nahezu der gesamte Durchmesser der Halbrohre oder Dreieck- oder Reckteckprofile zur Strangbildung genutzt wird.

In dem Strangverdampfer bilden sich nach dem Durchgang des (gegebenenfalls vorerhitzten) Produktstroms durch den Rohrverteiler und dem Austritt aus den Düsenrohren eine der Zahl der Öffnungen entsprechende Zahl von Produktsträngen aus, die der Schwerkraft folgend frei fallen und sich im Bodenbereich des Behälters sammeln.

Durch die erfindungsgemäße Anordnung der einzelnen Rohre im Entgasungsbehälter kann eine optimal gleichmäßige und dichte Verteilung der Produktstränge über den Querschnitt des Behälters erfolgen, so dass das Volumen des Entgasungsbehälters voll ausgenutzt werden kann. Insbesondere ergeben sich auch Vorteile für die Brüdenführung, da die flüchtigen Bestandteile des Produktstromes ohne konstruktiven Aufwand oberhalb des Produktaustritts abgezogen werden können und somit die Gefahr einer Strangablenkung durch seitlichen Abzug eliminiert ist. Durch die in der Höhe versetzten Rohre gemäß der bevorzugten Ausführung können die flüchtigen Bestandteile im Gegenstrom zu den frei fallenden Strängen und im Randbereich des Behälters nach oben strömen.

Dieses kann auch dadurch erreicht werden, dass die Düsenrohre seitlich beabstandet sind, unabhängig davon, ob sie in einer Ebene oder in mehreren übereinanderliegenden Ebenen angeordnet sind.

Gemäß Lehre der Erfindung sind die einzelnen Rohre als Halbrohre ausgeführt, die nach unten jeweils durch eine, insbesondere ebene Lochplatte begrenzt sind. Auf diese Weise lässt sich nahezu der gesamte Durchmesser der Halbrohre zur Strangbildung ausnutzen.

Durch die geringe Breite eines einzelnen Halbrohres oder eines ovalen Rohres gegenüber dem Durchmesser eines üblichen Plattenverteilers kann die aus Festigkeitsgründen erforderliche Plattendicke der Halbrohre oder Wanddicke der ovalen Rohre erheblich geringer ausfallen als die Plattendicke bei üblichen Plattenverteilern.

Nach einer weiteren Ausgestaltung der Erfindung werden anstelle der Halbrohre andere Rohrformen vorgesehen, die nicht notwendigerweise einen runden Querschnitt aufweisen. Beispielsweise kann aus dickwandigen Blechen oder gezogenen Profilen ein Dreieck- oder Rechteckquerschnitt realisiert werden.

Eine andere besondere Ausgestaltung der Erfindung sieht vor, dass die Düsenrohre, insbesondere zu ihren Enden hin fallend, zur Horizontalen geneigt angeordnet sind, um einen Winkel α von bis zu 15°, insbesondere 10° um beim Abstellen der Produktzuführung ein Leerlaufen der Rohre zu gewährleisten.

Nach einer anderen bevorzugten Lehre der Erfindung sind die Düsenrohre unmittelbar am Verteilerrohr des Produkteintrags angebracht, damit sich im Verteilerrohr keine Toträume ergeben. Die Verbindung kann durch Schweißen oder lösbare Befestigung z.B. mittels Flansch und Schrauben erreicht werden.

Eine weitere besondere Ausgestaltung der Erfindung sieht vor, dass die Enden (Abschlüsse) der Düsenrohre durch Abschrägen spitzwinklig gestaltet werden, um den Totraum am Rohrende zu minimieren.

In weiterer besonders bevorzugten Ausgestaltung der Erfindung ist vorgesehen, dass der Produktverteiler mehrere Verteilerrohre aufweist, die im Entgasungsbehälter angeordnet sind, so dass die Aufteilung des Produktstromes in Teilströmen innerhalb des Entgasungsbehälters erfolgt. Dabei kann das Verteilerrohr im inneren oberen Bereich des Entgasungsbehälters gekrümmt verlaufen. Ein solcher "Innenverteiler" hat den Vorteil, dass für den Produkteintrag nur ein einziges Rohr in den Entgasungsbehälter geführt werden muss, so dass die Vakuumdichtigkeit der Vorrichtung gewährleistet ist.

Es ist jedoch auch möglich, dass der Produktverteiler mehrere außerhalb des Entgasungsbehälters liegende Verteilerrohre aufweist, so dass die Aufteilung des Produktstromes in Teilströme außerhalb des Entgasungsbehälters erfolgt. Diese alternative Ausgestaltung hat den Vorteil, dass nötigenfalls ein einzelnes verstopftes Rohr mit geringerem Aufwand als bei "Innenverteilern" ausgetauscht werden kann. Dieser Vorteil wird jedoch mit dem Nachteil der aufwendigeren Abdichtung (Vakuumfestigkeit) erkauft.

Zum Erreichen einer optimalen Produktqualität wird daher der ersten Alternative, also dem "Innenverteiler" für viele Anwendungen der Vorzug zu geben sein.

Zum Vermeiden einer Verstopfungsgefahr, insbesondere bei instationärer Fahrweise, sieht eine weitere besondere Ausbildung der Erfindung vor, dass die Düsenrohre des Rohrverteilers mit zusätzlichen Heizrohren versehen sind. Diese Ausgestaltung hat auch hinsichtlich der Produktqualität große Vorteile. Denn, beispielsweise bedeutsam bei der Polycarbonat-Herstellung, kann die Temperatur in der Vorstufe reduziert werden, da der notwendige Energieeintrag zum Erhitzen des Polycarbonatstroms auf die Entgasungstemperatur erst "im letzten Augenblick" realisiert werden kann. Durch diese produktschonende Vorbehandlung wird die Farbe solcher Polymerer und damit die Produktqualität verbessert.

Dazu sieht eine weitere bevorzugte Ausgestaltung der Erfindung vor, dass die Heizrohre als Halbrohre, gegebenenfalls mit einem geringeren Durchmesser als die Düsenrohre ausgebildet und von oben auf die Düsenrohre aufgebracht sind. Eine solche Ausgestaltung ist zwar konstruktiv relativ aufwendig, dieser erhöhte Aufwand lässt sich jedoch durch die damit einhergehenden Vorteile leicht kompensieren. Anstelle der aufgesetzten Halbrohre sind auch andere Querschnitte einsetzbar, insbesondere solche mit ovalem Querschnitt.

Alle vom Produktstrom berührten Teile, insbesondere der Entgasungsbehälter bzw. der Produktverteiler können aus einem beliebigen Werkstoff gefertigt werden. Vorzugsweise werden jedoch diese Teile aus einem eisenarmen Werkstoff mit einem Eisengehalt von höchstens 10 % gefertigt, wenn sich beispielsweise durch Eisen katalysierte Wärme induzierte Zersetzungen des Produktes ergeben, wie dies beim Polycarbonat beobachtet wurde. Besonders bevorzugt sind alle produktberührten Teile aus Legierungen wie Alloy 59 (2.4605), Inconell 686 (2.4606), Alloy-B2, Alloy-B3, Alloy-B4, Alloy-C22, Alloy-C276, Alloy-C4 oder Alloy 625 gefertigt. Im Fall von beheizten Produktverteilern werden insbesondere Werkstoffe mit hoher Wärmeleitfähigkeit bevorzugt.

Eine bevorzugte Ausführung des Strangverdampfers ist dadurch gekennzeichnet, dass die Öffnungen in mehreren parallelen Reihen entlang der Düsenrohre angeordnet sind, wobei die jeweils benachbarten Reihen einen Mittenabstand von 1,0 bis 20 mm, vorzugsweise von 2,0 bis 10 mm haben.

Besonders bevorzugt sind die jeweils benachbarten Reihen von Öffnungen entlang der Rohrlänge zueinander versetzt angeordnet.

In einer vorteilhaften besonderen Ausführung des Strangverdampfers haben die jeweils benachbarten Öffnungen in einer Reihe einen Mittenabstand von 1,5 bis 20 mm, bevorzugt von 2 bis 10 mm zueinander,

Der Durchmesser der Öffnungen beträgt bevorzugt von 0,1 bis 10 mm, besonders bevorzugt von 0,5 bis 5 mm, ganz besonders bevorzugt 1 bis 3 mm.

Die Öffnungen in den Düsenrohren werden vorzugsweise gebohrt. Die Bohrungen werden vorzugsweise so ausgeführt, dass die Oberflächenrauhigkeit der Bohrungen nicht zu hoch ist, dass der Rauheitswert Rₐ also höchstens 12,5 µm beträgt. Rauhigkeitsklassen N6 bis N9 nach ISO 1302 für die Bohrungen haben sich als besonders günstig erwiesen.

Wichtig zur Erzeugung eines stabilen Polymerstrangs ist die bevorzugte Entgratung der Bohrungsenden. Besonders vorteilhaft bei manchen Polymeren ist das Senken der Bohrungen am Austritt. Der Senkwinkel liegt bevorzugt im Bereich von 60 bis 120°. Besonders bevorzugt ist ein Senkwinkel von etwa 90°. Die Senktiefe beträgt bevorzugt das 0,2 bis 2fache des Bohrungsdurchmessers.

Bei sehr langen (Länge/Durchmesser = 30) Düsenrohren macht sich der Druckgradient längs des Rohres negativ bemerkbar, da in Flussrichtung des Polymeren der Durchsatz durch die Öffnungen abnimmt. Eine Vergrößerung des Düsenrohrdurchmessers vergleichmäßigt zwar die unterschiedlichen Durchsätze durch die Öffnungen längs des Rohres, hat jedoch eine längere Produktverweilzeit mit der Gefahr einer thermischen Produktschädigung zur Folge.

In einer besonders bevorzugten Ausführung werden deshalb die Düsenrohre in Richtung des Polymerflusses mit Öffnungen mit vergrössertem Durchmesser versehen, um einen weitgehend konstanten Durchsatz je Öffnung zu erzielen.

In einer anderen bevorzugten Ausführung erfolgt eine Vergleichmäßigung des Durchsatzes entlang der Düsenrohre durch die Öffnungen durch eine unterschiedliche Öffnungsanzahl je Längeneinheit des Düsenrohres. Durch Abnahme der Bohrungsanzahl in Flussrichtung des Polymers verringert sich der Druckgradient entlang der Düsenrohre und damit tritt eine Vergleichmäßigung des Durchsatzes je Öffnung auf. Hiermit wird verhindert, dass bei niedrigem Gesamtdurchsatz durch die Vorrichtung der Durchsatz an einzelnen Öffnungen so niedrig wird, dass die an den Öffnungen austretenden Polymerfäden abreißen. Hierbei fiel dann die Entgasungsleistung ab.

Der erfindungsgemäße Strangverdampfer kann zur Entfernung von flüchtigen Komponenten aus Lösungen beliebiger flüssiger oder schmelzfähiger Polymere und ähnlichen Substanzen eingesetzt werden.

Die flüchtigen Komponenten ausser dem Lösungsmittel können sowohl nicht polymerisierte Monomere oder Oligomere als auch andere niedermolekulare Edukte sein.

Weiterer Gegenstand der Erfindung ist die Verwendung des erfindungsgemäßen Strangverdampfers zur Entfernung von flüchtigen Bestandteilen, insbesondere von Lösungsmittel und/oder Monomeren oder Oligomeren, aus Schmelzen oder Lösungen von thermisch empfindlichen Stoffen, insbesondere von Polymeren, Arzneistoffen, Naturstoffen oder Nahrungsmitteln.

Vorzugsweise wird der erfindungsgemäße Strangverdampfer zur Entgasung von thermoplastischen Polymeren eingesetzt. Diese Polymere umfassen alle Kunststoffe, die unter dem Einfluss von Druck und Temperatur fließfähig werden. Beispielhaft seien hier Polycarbonat, Polystyrol, Polyphenylensulfid, Polyurethan, Polyamid, Polyester, Polyacrylat, Polymethyl(meth)acrylat, SAN-Harz und ihre Copolymere sowie mögliche Mischungen der Polymere genannt.

Nachfolgend wird die Erfindung anhand der lediglich Ausführungsbeispiele darstellenden Figuren näher erläutert. Es zeigen:

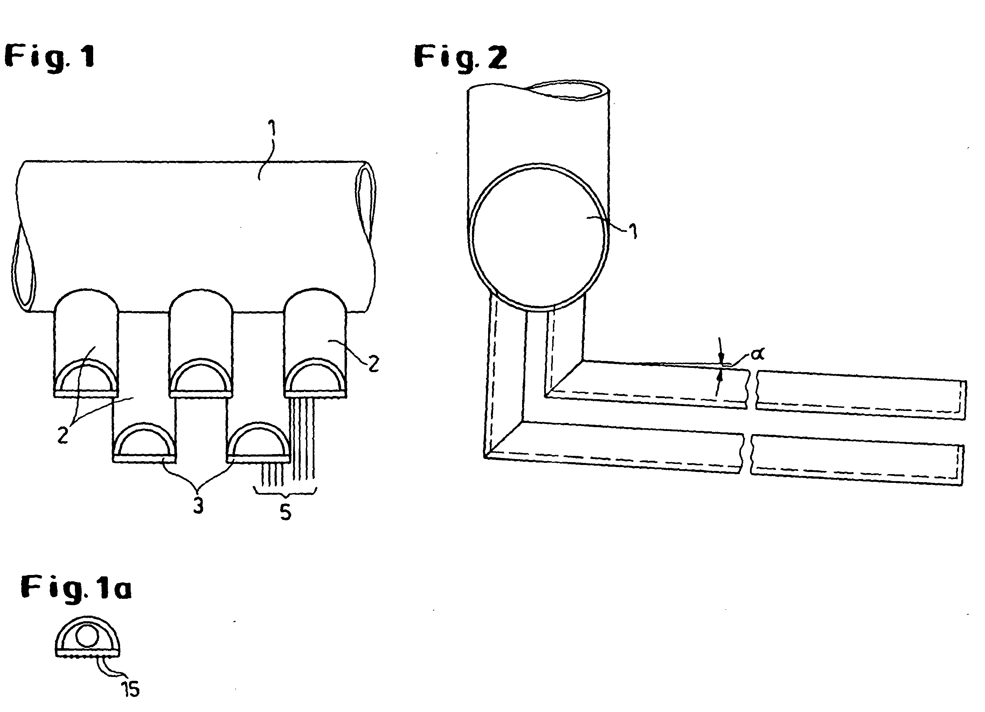

- Fig. 1: die Anordnung der Düsenrohre des Rohrverteilers, schematisch im Querschnitt in perspektivischer Darstellung,
- Fig. 1 a: das Rohrende eines Düsenrohres,
- Fig. 2: eine Variante des Rohrverteilers aus Fig. 1 in Seitenansicht,
- Fig. 3a - 3d: schematisch, vier Varianten der Düsenrohranordnung des erfindungsgemäßen Strangverdampfers, jeweils im Querschnitt,
- Fig. 4: den Gegenstand aus Fig. 1 mit beheizten Rohren und
- Fig. 4a: das Rohrende eines Düsenrohres,
- Fig. 5: den Gegenstand aus Fig. 2 mit beheizten Rohren,
- Fig. 6: einen schematischen Längsschnitt durch die gesamte Anordnung des Strangverdampfers,
- Fig. 7: einen Querschnitt durch den Strangverdampfer nach Fig. 6.

### Beispiele

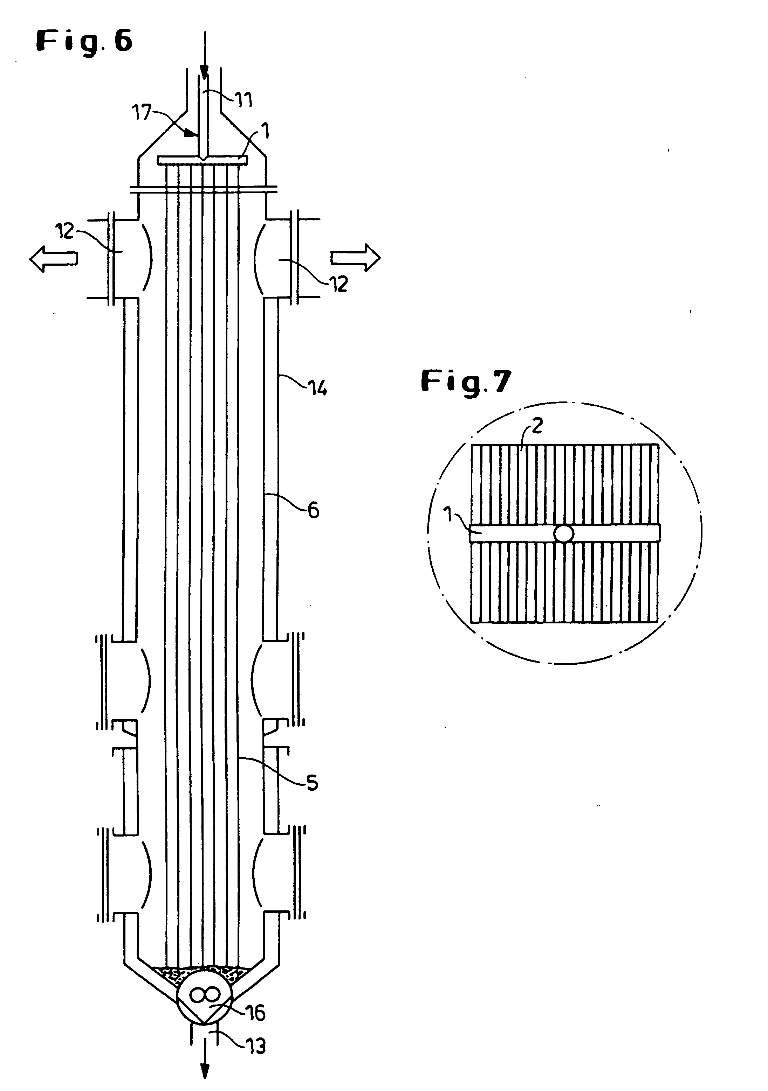

In Fig. 7 ist ein Strangverdampfer im Querschnitt gezeigt. Produkt strömt durch den Produkteintrag 11 zum Produktverteiler 17 aus Verteilerrohr 1 und den daraus verzweigenden Düsenrohren 2 (siehe Fig. 6). Der Produktstrom tritt aus den Öffnungen 15 der Düsenrohre 2 aus (siehe Figuren 1 und 1a), bildet frei fallende Stränge 5 und sammelt sich am Boden des Entgasungsbehälters 6. Eine Pumpe 16 fördert das entgaste Produkt in Richtung Produktaustrag 13. Am oberen Deckel des Entgasungsbehälters 6 sind Ausgänge 12 für flüchtige Bestandteile angebracht. Der Mantel des Entgasungsbehälters ist als Heizmantel 14 ausgebildet. Bei dieser Ausführung sind die Düsenrohre in einer Ebene nebeneinander angeordnet (siehe Fig. 6 und 7).

Der Produktverteiler des Strangverdampfers ist schematisch in Fig. 1 dargestellt, wobei der Produktstrom durch ein Verteilerrohr 1 einer Vielzahl einzelner in das Verteilerrohr 1 mündenden Düsenrohre 2 zugeführt wird, die im dargestellten und insoweit bevorzugten Ausführungsbeispiel als Halbrohre 2 ausgebildet sind, und nach unten von Lochplatten 3 verschlossen werden. Es ist schnell ersichtlich, dass dadurch, dass die einzelnen Düsenrohre 2 unmittelbar am Verteilerrohr 1 des Produkteintrages angebracht sind, im Verteilerrohr 1 keine Produkttoträume entstehen können. Im Gegensatz zur Ausführung entsprechend Fig. 7 sind die Düsenrohre 2 nach Fig. 1 in zwei übereinander liegenden Ebenen versetzt nebeneinander angeordnet.

In der Variante des Rohrverteilers, der in Fig. 2 in einer Seitenansicht dargestellt ist, weisen die Düsenrohre 2 bevorzugt eine leichte Neigung zur Horizontalen in Richtung ihrer Enden auf und sind darüber hinaus an ihren Enden mit einem Stopfen 4 versehen (siehe Fig. 2a).

Aus Fig. 1 geht deutlich hervor, dass die Belegungsdichte des Rohrverteilers des Strangverdampfers durch die Anordnung der einzelnen Rohre in mehreren Ebenen übereinander und gegeneinander versetzt optimiert ist. Zur besseren Übersicht sind einzelne Stränge 5 nur unten rechts in Fig. 1 angegeben.

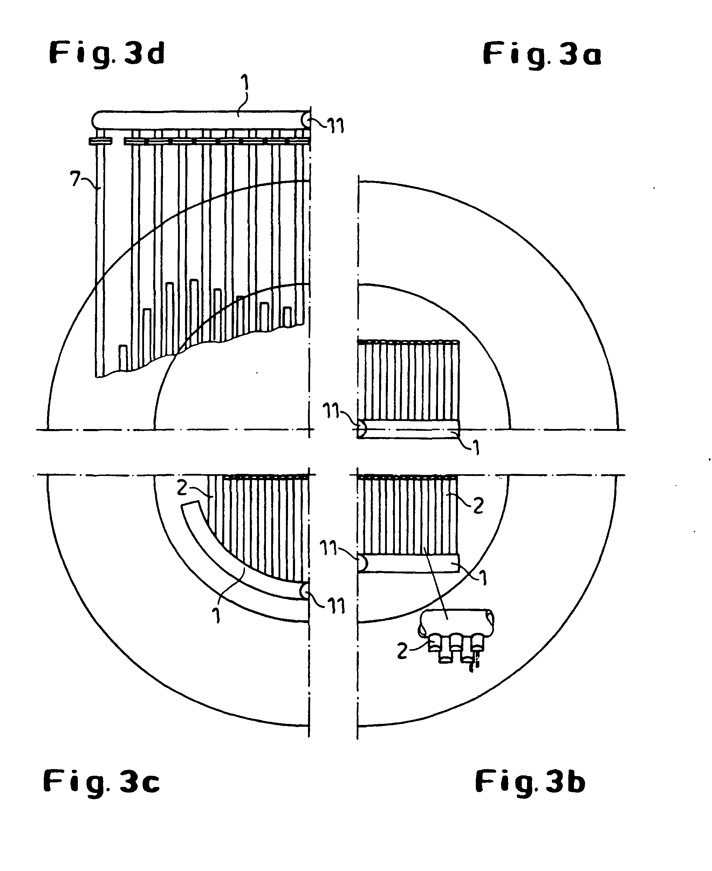

Die verbesserte Belegungsdichte, also der Produktdurchsatz je Flächeneinheit, lässt sich anhand der schematischen Darstellung in den Figuren 3a bis 3d deutlich erkennen. Bei einer Anordnung mit außenliegendem Verteiler (in Fig. 3d dargestellt) werden durch die Wandung des Entgasungsbehälters 6 voneinander beabstandete Rohre ("Lanzen") 7 durchgeführt, die im Versuchsbeispiel von zwei Seiten ineinander geschachtelt wurden.

In Fig. 3c ist dargestellt, dass bei einem Innenverteiler mit der Lösung mittels versetzter Halbrohre 2 sich dieselbe Bohrungsanzahl auf dem halben Durchmesser unterbringen lässt. Dies bedeutet, dass die Belegung (Bohrungsanzahl je Flächeneinheit) viermal so groß ist, wie bei der obengenannten Anordnung. Bei einer Dreiecksanordnung der Bohrungen kann nahezu die dichtestmögliche Belegung erfolgen. Bei einer Bohrungsteilung von 4 mm ergibt sich ein minimaler Durchmesser von 1130 mm.

Während in Fig. 3c ein gekrümmtes Verteilerrohr dargestellt ist, welches unterschiedlich lange Düsenrohre 2 im Bohrungsbereich und damit unterschiedliche Durchsätze je Rohr bedingt, ist in Fig. 3b ein gerades Verteilerrohr 1 dargestellt, welches zu gleichen Rohrlängen und gleichem Durchsatz je Rohr 2 führt. In Fig. 3a ist angedeutet, dass der Rohrverteiler ein zentrales Verteilerrohr 1 haben kann, von dem aus Düsenrohre 2 in zwei Richtungen verzweigen.

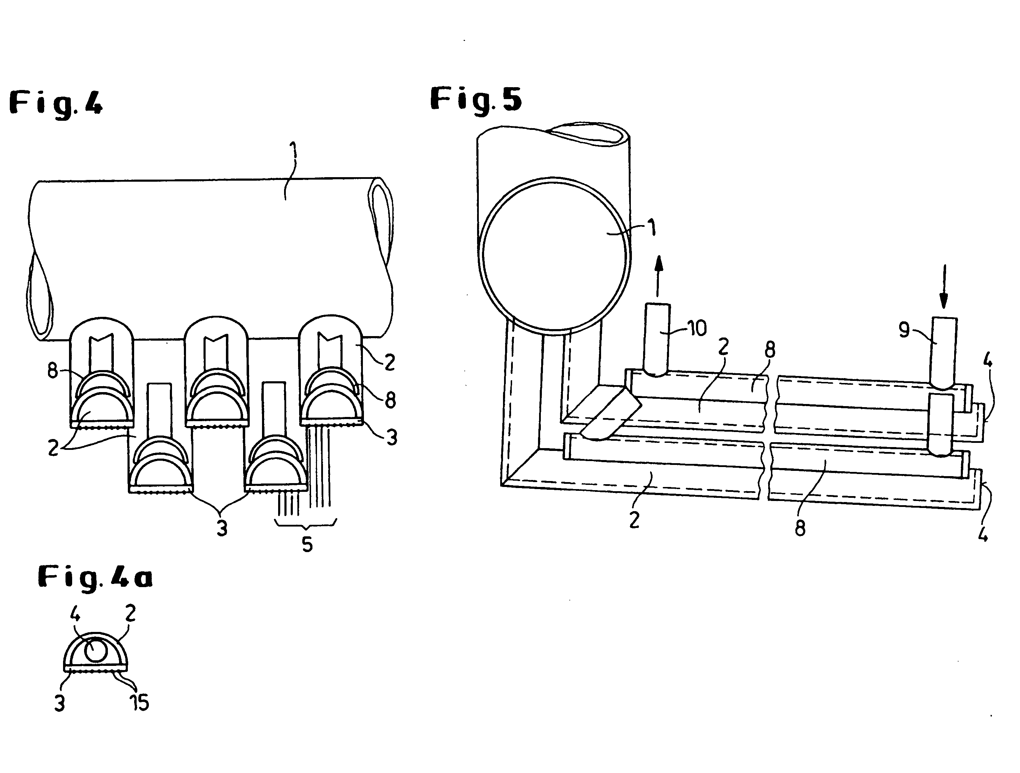

In den Fig. 4 und 5 ist schließlich dargestellt, dass auch eine Beheizung des Rohrverteilers möglich ist. Dabei ist auf die einzelnen Halbrohre 2 jeweils ein Heizrohr 8 aufgebracht, dessen Durchmesser geringfügig kleiner als der des Halbrohres 2 ist, um eine Beeinträchtigung zu vermeiden. Ein Heizmedium wird in Richtung des Pfeiles bei Einlass 9 den einzelnen Heizrohren zugeführt und entlang des Pfeiles bei Auslass 10 abgezogen, so dass sich eine Beheizung im Gegenstrom ergibt. Auch hier können die Enden der Halbrohre 2 mit einem Stopfen 4 verschlossen sein (Fig. 4a). In Fig. 5 ist erkennbar, dass die Beheizung der einzelnen Halbrohre 2 mittels einzelner Heizrohre 8 zwar einen erheblichen konstruktiven Aufwand bedeutet, durch die Möglichkeit der schonenden Produktbehandlung und deutlichen Verbesserung der Produktqualität ist dieser Aufwand jedoch berechtigt.

Der erfindungsgemäße Strangverdampfer führt aufgrund des besonderen Aufbaus des Rohrverteilers zu einer hohen Belegungsdichte und einer äußerst hohen Flexibilität hinsichtlich Produktdurchsatz und Werkstoffauswahl. Weitere Vorteile ergeben sich durch den Fertigungsaufwand und die Werkstoffverfügbarkeit, da die einzelnen Rohre problemlos vorgefertigt werden können. Auch kann, wie bereits ausgeführt, die Brüdenführung optimal erfolgen, da die flüchtigen Bestandteile mit der erfindungsgemäßen Anordnung der einzelnen Rohre ohne konstruktiven Aufwand oberhalb des Produktaustritts abgezogen werden können.

### Anwendungsbeispiel

In einem Strangverdampfer entsprechend Fig. 6 wird ein styrolhaltiges SAN-Copolymer mit einem Gehalt von ca. 2000 ppm an flüchtigen Verbindungen (Styrol, Acrylnitril, Ethylbenzol (Lösungsmittel)) eingedampft. Bei einer Produkttemperatur von 220°C ergibt sich eine Viskosität von über 1000 Pa.s. Es wird ein Rohrverteiler nach Fig. 6 bzw. 7 mit in einer Ebene liegenden Halbrohren (ähnlich Fig. 1a) verwendet. Die nach unten abschließende Halbrohrplatte 3 weist eine Wandstärke von 25 mm auf. Die Bohrungen 15 sind gestuft ausgeführt, sie verjüngen sich von 3 auf 2 mm. Im Bereich des Bohrungsdurchmessers von 3 mm beträgt der Mittenrauhwert Rₐ 3,0 µm, im Bereich des Bohrungsdurchmessers von 2 mm (zum Austritt) beträgt der Mittenrauhwert Rₐ 1,6 µm. Die Bohrungsenden sind entgratet und weisen eine Senkung auf. Bei einem Durchsatz von ca.100 g pro Stunde und Bohrung ergibt sich bei einem Strangverdampfer mit 6 m langen Polymerfäden, ein Restgehalt an flüchtigen Verbindungen von 100 ppm im entgasten Produkt.

## Patentansprüche

1. Strangverdampfervorrichtung wenigstens aufweisend einen Entgasungsbehälter (6), einen Produkteintrag (11), einen Produktverteiler (17), einen Produktaustrag (13) und einen Brüdenaustrag (12), wobei der Produktverteiler (17) als Rohrverteiler mit mindestens einem Verteilerrohr (1) und mit einer Vielzahl parallel angeordneter Düsenrohre (2), die eine Vielzahl von Öffnungen (15) in der Rohrwand aufweisen, ausgebildet ist, und dass die Düsenrohre (2) vorzugsweise in mehreren Ebenen übereinander und seitlich gegeneinander versetzt angeordnet sind, **dadurch gekennzeichnet, dass** die einzelnen Düsenrohre (2) als Halbrohre oder Dreieck- oder Reckteckprofile ausgeführt sind, die nach unten jeweils durch eine ebene Lochplatte (3) begrenzt sind, wobei die Vielzahl von Öffnungen (15) in der Lochplatte (3) derart angeordnet sind, dass nahezu der gesamte Durchmesser der Halbrohre oder Dreieck- oder Reckteckprofile zur Strangbildung genutzt wird.

2. Strangverdampfer nach Anspruch 1, **dadurch gekennzeichnet, dass** die Düsenrohre (2) um einen Winkel α von bis zu 15°, insbesondere bis 10°, zur Horizontalen geneigt angeordnet sind.

3. Strangverdampfer nach einem der Ansprüche 1 bis 2, **dadurch gekennzeichnet, dass** die Düsenrohre (2) an ihrem freien Ende abgeschlossen und abgeschrägt sind.

4. Strangverdampfer nach einem der Ansprüche 1 bis 3, **dadurch gekennzeichnet, dass** die Düsenrohre (2) unmittelbar am Verteilerrohr (1) des Produkteintrages (11) angebracht sind, insbesondere angeschweißt oder lösbar befestigt sind.

5. Strangverdampfer nach einem der Ansprüche 1 bis 4, **dadurch gekennzeichnet, dass** der Produktverteiler (17) mehrere Verteilerrohre (1) aufweist, die innerhalb des Entgasungsbehälters (6) angeordnet sind.

6. Strangverdampfer nach einem der Ansprüche 1 bis 4, **dadurch gekennzeichnet, dass** der Produktverteiler (17) mehrere Verteilerrohre (1) aufweist, die außerhalb des Entgasungsbehälters (6) angeordnet sind.

7. Strangverdampfer nach einem der Ansprüche 1 bis 6, **dadurch gekennzeichnet, dass** die Düsenrohre (2) des Rohrverteilers mit zusätzlichen Heizrohren (8) versehen sind.

8. Strangverdampfer nach Anspruch 7, **dadurch gekennzeichnet, dass** die Heizrohre (8) als Halbrohre ausgebildet sind und von oben auf den Düsenrohren (2) aufgebracht sind.

9. Strangverdampfer nach einem der Ansprüche 1 bis 8, **dadurch gekennzeichnet, dass** die produktberührten Teile des Strangverdampfers aus einem eisenarmen Werkstoff mit einem Eisengehalt von höchstens 10 % bestehen.

10. Strangverdampfer nach einem der Anspruch 9, **dadurch gekennzeichnet, dass** der Werkstoff aus den Legierungen Alloy-B2, Alloy-B3, Alloy-B4, Alloy-C22, Alloy-C276, Alloy-C4 oder Alloy 625 ausgewählt ist.

11. Strangverdampfer nach einem der Ansprüche 1 bis 10, **dadurch gekennzeichnet, dass** die Öffnungen (15) in mehreren parallelen Reihen entlang der Düsenrohre (2) angeordnet sind, wobei die jeweils benachbarten Reihen einen Mittenabstand von 1,0 bis 20 mm, vorzugsweise von 2,0 bis 10 mm haben.

12. Strangverdampfer nach Anspruch 11, **dadurch gekennzeichnet, dass** die jeweils benachbarten Reihen von Öffnungen (15) entlang der Rohrlänge zueinander versetzt angeordnet sind.

13. Strangverdampfer nach Anspruch 11 oder 12, **dadurch gekennzeichnet, dass** die jeweils benachbarten Öffnungen (15) in einer Reihe einen Mittenabstand von 1,5 bis 20 mm, bevorzugt von 2 bis 10 mm zueinander haben.

14. Strangverdampfer nach einem der Ansprüche 1 bis 13, **dadurch gekennzeichnet, dass** der Durchmesser der Öffnungen (15) von 0,1 bis 10 mm, bevorzugt von 0,5 bis 5 mm, besonders bevorzugt von 1 bis 3 mm beträgt.

15. Strangverdampfer nach einem der Ansprüche 1 bis 14, **dadurch gekennzeichnet, dass** die Öffnungen gebohrt sind, dass die Bohrungen (15) an den Enden entgratet sind und/oder dass die Bohrungen (15) an ihrem Ausgang zum Entgasungsbehälter (6) und gegebenenfalls an ihrem Eingang eine Senkung aufweisen.

16. Strangverdampfer nach Anspruch 15, **dadurch gekennzeichnet, dass** die Bohrungen (15) einen Mittenrauhwert Rₐ von höchstens 12,5 µm aufweisen.

17. Verwendung des Strangverdampfers nach einem der Ansprüche 1 bis 16 zur Entfernung von flüchtigen Bestandteilen, insbesondere von Lösungsmittel und/oder Monomeren oder Oligomeren, aus Schmelzen oder Lösungen von thermisch empfindlichen Stoffen insbesondere Polymeren, Arzneistoffen, Naturstoffen oder Nahrungsmitteln.

## Claims

1. A strand devolatiliser device at least comprising a degassing container (6), a product inlet (11), a product distributor (17), a product outlet (13) and a vapour outlet (12), wherein the product distributor (17) takes the form of a tube distributor with at least one distributor tube (1) and a plurality of die tubes (2) arranged in parallel, which comprise a plurality of apertures (15) in the tube wall, and in that the die tubes (2) are preferably arranged in several planes one above the other and staggered laterally relative to one another, **characterised in that** the individual die tubes (2) take the form of half-tubes or triangular or rectangular profiles, which are each bounded at the bottom by a flat perforated plate (3), wherein the plurality of apertures (15) in the perforated plate (3) are arranged such that virtually the entire diameter of the half-tubes or triangular or rectangular profiles are used for strand formation.

2. A strand devolatiliser according to claim 1, **characterised in that** the die tubes (2) are inclined at an angle α to the horizontal of up to 15°, in particular up to 10°.

3. A strand devolatiliser according to any one of claims 1 to 2, **characterised in that** the die tubes (2) are closed and bevelled at their free ends.

4. A strand devolatiliser according to any one of claims 1 to 3, **characterised in that** the die tubes (2) are fitted, in particular welded or fastened detachably, directly on the distributor tube (1) of the product inlet (11).

5. A strand devolatiliser according to any one of claims 1 to 4, **characterised in that** the product distributor (17) comprises a plurality of distributor tubes (1), which are arranged inside the degassing container (6).

6. A strand devolatiliser according to any one of claims 1 to 4, **characterised in that** the product distributor (17) comprises a plurality of distributor tubes (1), which are arranged outside the degassing container (6).

7. A strand devolatiliser according to any one of claims 1 to 6, **characterised in that** the die tubes (2) of the tube distributor are provided with additional heating tubes (8).

8. A strand devolatiliser according to claim 7, **characterised in that** the heating tubes (8) take the form of half-tubes and are fitted on the die tubes (2) from above.

9. A strand devolatiliser according to any one of claims 1 to 8, **characterised in that** the components of the strand devolatiliser which come into contact with the product consist of a low-iron material with an iron content of at most 10 %.

10. A strand devolatiliser according to claim 9, **characterised in that** the material is selected from the alloys Alloy-B2, Alloy-B3, Alloy-B4, Alloy-C22, Alloy-C276, Alloy-C4 or Alloy 625.

11. A strand devolatiliser according to any one of claims 1 to 10, **characterised in that** the apertures (15) are arranged in a plurality of parallel rows along the die tubes (2), wherein the adjoining rows exhibit centre spacing of 1.0 to 20 mm, preferably 2.0 to 10 mm.

12. A strand devolatiliser according to claim 11, **characterised in that** the adjoining rows of apertures (15) are arranged staggered relative to one another along the length of the tube.

13. A strand devolatiliser according to claim 11 or claim 12, **characterised in that** the adjoining apertures (15) in a row exhibit centre spacing of 1.5 to 20 mm, preferably 2 to 10 mm.

14. A strand devolatiliser according to any one of claims 1 to 13, **characterised in that** the diameter of the apertures (15) amounts to from 0.1 to 10 mm, preferably from 0.5 to 5 mm, particularly preferably from 1 to 3 mm.

15. A strand devolatiliser according to any one of claims 1 to 14, **characterised in that** the apertures are drilled, **in that** the drill holes (15) are deflashed at the ends and/or **in that** the drill holes (15) are countersunk at their outlet to the degassing container (6) and optionally at their inlet.

16. A strand devolatiliser according to claim 15, **characterised in that** the drill holes (15) exhibit a peak-to-valley height Rₐ of at most 12.5 µm.

17. Use of the strand devolatiliser according to any one of claims 1 to 16 for removing volatile constituents, in particular solvents and/or monomers or oligomers, from melts or solutions of heat-sensitive substances, in particular polymers, medicinal substances, natural materials or foodstuffs.

## Revendications

1. Dispositif d'évaporateur à tubes, présentant au moins un récipient de dégazage (6), une entrée de produit (11), un répartiteur de produit (17), une sortie de produit (13) et une sortie de vapeur (12), dans lequel le répartiteur de produit (17) est réalisé sous la forme d'un répartiteur tubulaire avec au moins un tube de répartition (1) et avec une pluralité de buses tubulaires (2) disposées en parallèle, qui présentent une pluralité d'orifices (15) dans la paroi des tubes, et dans lequel les buses tubulaires (2) sont disposées de préférence dans plusieurs plans les unes au-dessus des autres et sont décalées latéralement les unes par rapport aux autres, **caractérisé en ce que** les buses tubulaires individuelles (2) sont constituées par des demi-tubes ou des profilés triangulaires ou rectangulaires, qui sont délimités vers le bas à chaque fois par une plaque perforée plane (3), la pluralité d'orifices (15) étant disposés dans la plaque perforée (3) de telle façon que pratiquement tout le diamètre des demi-tubes ou des profilés triangulaires ou rectangulaires soit utilisé pour la formation des brins.

2. Evaporateur à tubes selon la revendication 1, **caractérisé en ce que** les buses tubulaires (2) sont disposées avec un angle d'inclinaison α pouvant atteindre 15°, en particulier 10°, par rapport à l'horizontale.

3. Evaporateur à tubes selon l'une quelconque des revendications 1 à 2, **caractérisé en ce que** les buses tubulaires (2) sont fermées et biseautées à leur extrémité libre.

4. Evaporateur à tubes selon l'une quelconque des revendications 1 à 3, **caractérisé en ce que** les buses tubulaires (2) sont installées, en particulier soudées ou fixées de manière démontable, immédiatement sur le tube de répartition (1) de l'entrée de produit (11).

5. Evaporateur à tubes selon l'une quelconque des revendications 1 à 4, **caractérisé en ce que** le répartiteur de produit (17) présente plusieurs tubes de répartition (1), qui sont disposés à l'intérieur du récipient de dégazage (6).

6. Evaporateur à tubes selon l'une quelconque des revendications 1 à 4, **caractérisé en ce que** le répartiteur de produit (17) présente plusieurs tubes de répartition (1), qui sont disposés à l'extérieur du récipient de dégazage (6).

7. Evaporateur à tubes selon l'une quelconque des revendications 1 à 6, **caractérisé en ce que** les buses tubulaires (2) du répartiteur tubulaire sont pourvues de tubes chauffants supplémentaires (8).

8. Evaporateur à tubes selon la revendication 7, **caractérisé en ce que** les tubes chauffants (8) sont constitués par des demi-tubes et sont installés par le haut sur les buses tubulaires (2).

9. Evaporateur à tubes selon l'une quelconque des revendications 1 à 8, **caractérisé en ce que** les pièces de l'évaporateur à tubes en contact avec le produit sont constituées d'un matériau pauvre en fer, avec une teneur en fer de 10 % au maximum.

10. Evaporateur à tubes selon la revendication 9, **caractérisé en ce que** le matériau est choisi parmi les alliages Alloy-B2, Alloy-B3, Alloy-B4, Alloy-C22, Alloy-C276, Alloy-C4 ou Alloy 625.

11. Evaporateur à tubes selon l'une quelconque des revendications 1 à 10, **caractérisé en ce que** les orifices (15) sont disposés en plusieurs rangées parallèles le long des buses tubulaires (2), les deux rangées respectivement voisines présentant une distance moyenne de 1,0 à 20 mm, de préférence de 2,0 à 10 mm.

12. Evaporateur à tubes selon la revendication 11, **caractérisé en ce que** les rangées d'orifices (15) respectivement voisines sont disposées avec un décalage l'une par rapport à l'autre le long de la longueur des tubes.

13. Evaporateur à tubes selon la revendication 11 ou 12, **caractérisé en ce que** les orifices (15) respectivement voisins dans une rangée présentent une distance moyenne de 1,5 à 20 mm, de préférence de 2 à 10 mm l'un par rapport à l'autre.

14. Evaporateur à tubes selon l'une quelconque des revendications 1 à 13, **caractérisé en ce que** le diamètre des orifices (15) vaut de 0,1 à 10 mm, de préférence de 0,5 à 5 mm, et de manière particulièrement préférée de 1 à 3 mm.

15. Evaporateur à tubes selon l'une quelconque des revendications 1 à 14, **caractérisé en ce que** les orifices sont forés, **en ce que** les trous forés (15) sont ébavurés aux extrémités et/ou **en ce que** les trous forés (15) présentent un enfoncement à leur sortie vers le récipient de dégazage (6) et éventuellement à leur entrée.

16. Evaporateur à tubes selon la revendication 15, **caractérisé en ce que** les trous forés (15) présentent une rugosité moyenne Rₐ de 12,5 µm au maximum.

17. Utilisation de l'évaporateur à tubes selon l'une quelconque des revendications 1 à 16 pour l'élimination de composés volatils, en particulier de solvants et/ou de monomères ou d'oligomères, hors de bains de fusion ou de solutions de substances thermiquement sensibles, en particulier de polymères, de substances médicamenteuses, de substances naturelles ou de denrées alimentaires.
